(19) Europäisches Patentamt
European Patent Office
Office européen des brevets

(11) EP 0 433 010 B1

(12) EUROPEAN PATENT SPECIFICATION

(45) Date of publication and mention of the grant of the patent:
**26.06.1996 Bulletin 1996/26**

(51) Int Cl.6: **C08F 8/14**, C08F 8/44, C11D 3/00

(21) Application number: **90313427.8**

(22) Date of filing: **11.12.1990**

# (54) Polycarboxylate compounds and detergent compositions containing them

Polycarboxylat-Verbindungen und diese Verbindungen enthaltende Waschmittelzusammensetzungen

Composés polycarboxylates et compositions détergentes renfermant ces composés

(84) Designated Contracting States:
**CH DE ES FR GB IT LI NL SE**

(30) Priority: **14.12.1989 GB 8928318**

(43) Date of publication of application:
**19.06.1991 Bulletin 1991/25**

(73) Proprietors:
- **UNILEVER PLC**
**London EC4P 4BQ (GB)**
Designated Contracting States:
**GB**
- **UNILEVER N.V.**
**NL-3013 AL Rotterdam (NL)**
Designated Contracting States:
**CH DE ES FR IT LI NL SE**

(72) Inventors:
- **Khoshdel, Ezat**
**Wirral, Merseyside L63 3JW (GB)**
- **van Kralingen, Cornelis Gerhard**
**Wirral, Merseyside L63 3JW (GB)**

(74) Representative: **Fransella, Mary Evelyn et al**
**Unilever PLC**
**Patent Division**
**Colworth House**
**Sharnbrook**
**Bedford MK44 1LQ (GB)**

(56) References cited:
**EP-A- 0 234 416**
**DE-B- 1 114 826**
**GB-A- 2 094 806**
**US-A- 3 306 883**
**US-A- 4 972 036**

- **PATENT ABSTRACTS OF JAPAN, vol. 9, no. 112 (C-281)[1835], 16th May 1985; & JP-A-60 4504 (NIHON JIYUNYAKU K.K.) 11-01-1985**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 433 010 B1

## Description

### TECHNICAL FIELD

The present invention relates to polycarboxylate polymers and their use as builders in detergent compositions.

### BACKGROUND AND PRIOR ART

Polycarboxylate polymers, are well-known ingredients of detergent compositions and provide various benefits. They are used, for example, as antiredeposition and antiincrustation agents, and for supplementary detergency building, especially in conjunction with water-insoluble aluminosilicate builders.

Acrylic and maleic polymers have been especially widely used. For example, GB 1 596 756 (Procter & Gamble) is concerned with maleic polymers, especially methyl vinyl ether/maleic anhydride copolymers, and their use as auxiliary detergent builders in phosphate-built compositions. GB 1 460 893 (Unilever) discloses the use of polyacrylates as antiincrustation agents in detergent compositions containing ortho- and pyrophosphate builders. EP 25 551B (BASF) discloses the use of acrylic/maleic copolymers as antiincrustation agents. EP 124 913B (Procter & Gamble) discloses detergent compositions containing a combination of polyacrylate and acrylic/maleic copolymer.

Although various polymeric polycarboxylates have been disclosed in the literature, only polyacrylates and acrylate/maleate copolymers have found widespread use in commercial detergent products.

The present invention is based on the observation that efficient calcium binding can be obtained from polymers in which calcium-binding carboxyl groups are positioned not on a polymer main chain but on side chains joined to a carbon backbone by means of an ester linkage.

US 3 816 318 (Hentschel) discloses detergent compositions containing, as detergency builders, monomeric monoesters of dibasic or polybasic carboxylic acids, for example, citric acid, with monomeric polyhydric alcohols, for example, sorbitol or mannitol.

### DEFINITION OF THE INVENTION

In its first aspect, the present invention provides a polycarboxylate polymer containing at least one unit of the formula I:

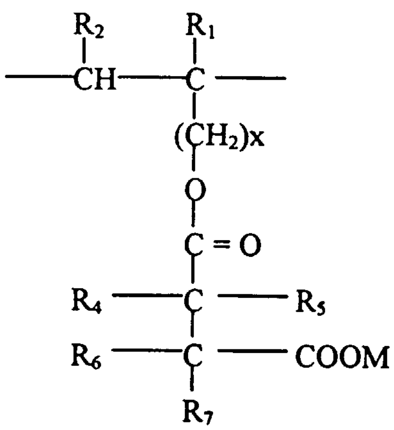

(I)

wherein x is 0, 1 or 2; the R groups represent hydrogen atoms, hydroxyl groups, carboxyl groups, $C_1$-$C_3$ alkyl groups, $C_1$-$C_3$ hydroxyalkyl groups, $C_1$-$C_3$ carboxyalkyl groups, or a hydroxycarboxymethyl group, provided that at least one of $R_4$, $R_5$, $R_6$ and $R_7$ contains a -COOM group; and M is a hydrogen atom or a solubilising cation. preferably an alkali metal or ammonium ion, and more preferably a sodium ion.

In its second aspect, the present invention provides the use of polymers as defined above to bind divalent and polyvalent metals, especially calcium; more especially, their use as builders in detergent compositions.

In its third aspect, the present invention provides a detergent composition comprising at least one detergent-active compound, suitably in an amount of from 0.5 to 60 wt%, and at least one detergency builder consisting wholly or partially of a polymer as defined above, suitably in an amount of from 15 to 80 wt%, and optionally other detergent ingredients to 100 wt%.

## DETAILED DESCRIPTION OF THE INVENTION

### The polymers

The polymers characterised by the presence of pendant dicarboxylic acid groups joined to a main chain by means of an ester linkage, either directly to a carbon atom of the main chain (x = 0 in the formula I), or via a methylene or ethylene group (x = 1 or 2 in the formula I). Polymers in which x = 0 may thus be regarded as esters of polymers having hydroxyl groups attached to the main chain, with polycarboxylic acids containing at least three carboxyl groups; while polymers in which x = 1 or 2 may be regarded as esters of polymers having hydroxymethyl or hydroxyethyl groups attached to the main chain, with polycarboxylic acids containing at least three carboxyl groups. At least three carboxyl groups are required from the acid moiety, one to participate in the ester linkage and at least two more to provide calcium binding capacity.

Suitable polycarboxylic acids include citric, isocitric and propane-1,2,3-tricarboxylic acids. Advantageously the polycarboxylic acid contains a hydroxyl group. Hydroxytricarboxylic acids such as citric acid are especially preferred.

The hydroxyl-group-containing moiety may originate from a wide variety of polymeric compounds. These include polyvinyl alcohol, partially hydrolysed polyvinyl acetate, allyl alcohol, polyallyl alcohol, poly(α-hydroxyacrylic) acid; polymers of α(hydroxymethyl) acrylic acid, (2-hydroxyethyl)acrylate or methacrylate; and polysaccharides, for example, starches, celluloses, inulin, pectin, α- and beta-methylglycosides, amyloses, xylan, polygalacturonic acid, polyglucuronic acid.

A first especially preferred class of compounds according to the present invention are esters of polyvinyl alcohol, or partially hydrolysed polyvinyl acetate, with citric acid. These are compounds containing units of the formula I in which x = 0, and $R_1$, $R_2$, $R_4$ and $R_5$ are all hydrogen atoms, $R_6$ is a hydroxyl group, and $R_7$ is is a carboxymethyl group. These units may be represented by the formula II:

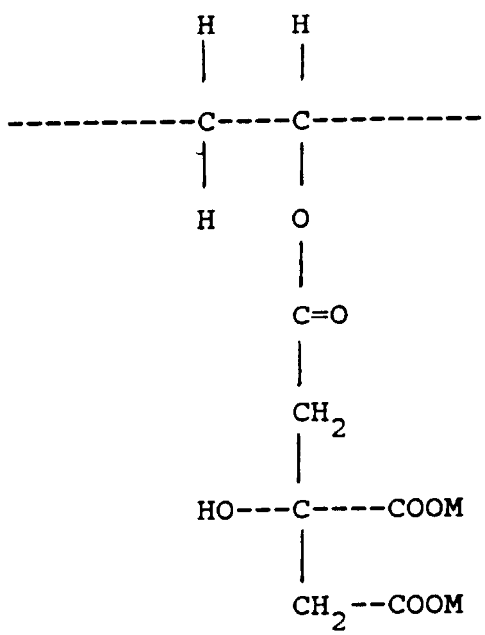

(II)

A second especially preferred class of polymers according to the present invention are esters of polyallyl alcohol or poly(α-hydroxymethylacrylic) acid with citric acid. These are polymers containing units of the formula I in which x = 1, $R_1$ is a hydrogen atom or a carboxyl group, $R_2$, $R_4$ and $R_5$ are all hydrogen atoms, $R_6$ is a hydroxyl group, and $R_7$ is a carboxymethyl group. These compounds contain units of the formula III:

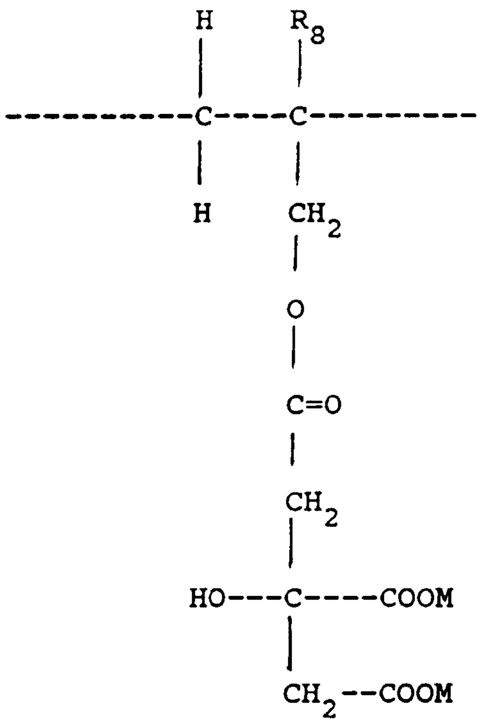

(III)

wherein $R_8$ represents a hydrogen atom or a -COOM group.

The polymers of the invention may also contain other units. Preferred are units containing further carboxyl groups, which contribute to calcium binding.

Especially preferred units are those of any of the following formulae IV to IX:

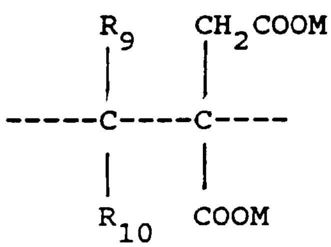

(IV)

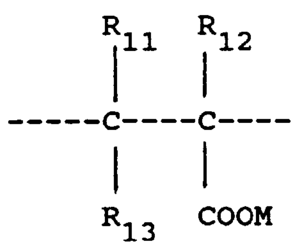

(V)

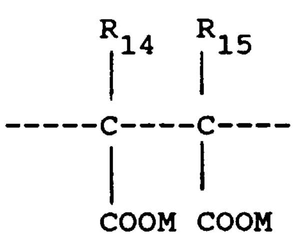

(VI)

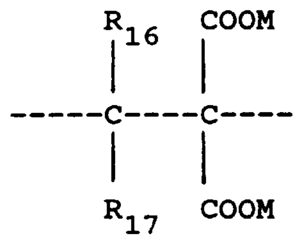

(VII)

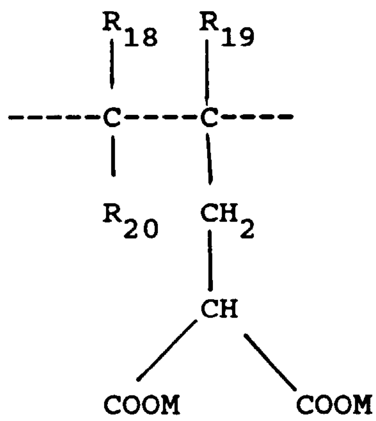

(VIII)

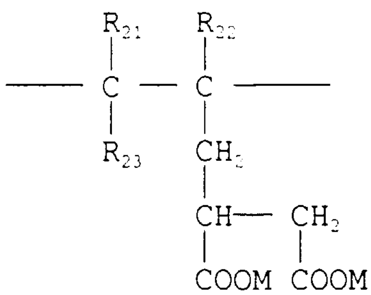

(IX)

wherein the R groups are hydrogen atoms, methyl groups or ethyl groups, in any combination, but preferably hydrogen atoms; and M represents a hydrogen atom or a solubilising cation, preferably a sodium ion.

The polymers may also contain units containing further, unesterified hydroxyl groups, for example, vinyl alcohol or allyl alcohol units; and the presence of such units is especially likely in polymers prepared by esterification of a preformed hydroxylated polymer.

The polymers may also contain units containing both hydroxyl and carboxyl groups, as disclosed in EP-A-0 435 505A (Unilever), for example:

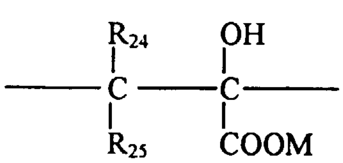

(X)

and/or units of the formula XI:

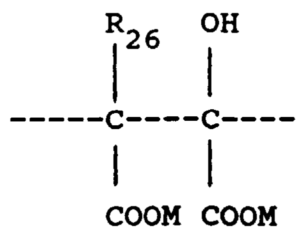

(XI)

and/or units of the formula XII:

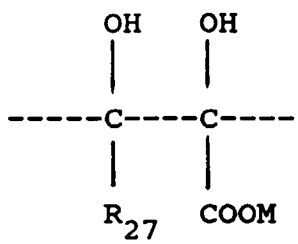

(XII)

and/or units of the formula XIII:

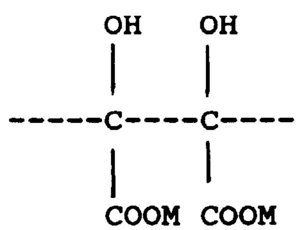

(XIII)

and/or units of the formula XIV:

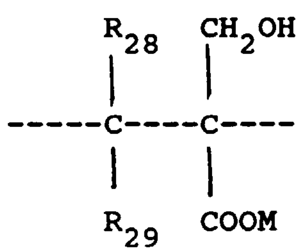

(XIV)

and/or units of the formula XV:

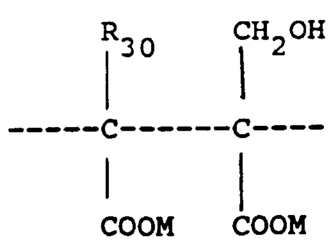

(XV)

wherein each of the R groups, which may be the same or different, represents a hydrogen atom, a methyl group or an ethyl group, preferably a hydrogen atom; and M represents a hydrogen atom or a solubilising cation, preferably an alkali metal or ammonium cation, more preferably a sodium ion.

Polymeric compounds in accordance with the invention have a number-average molecular weight of from 1000 to 100 000, preferably from 1000 to 15 000. The weight-average molecular weight is from 1000 to 1 000 000, preferably from 1000 to 100 000.

Preparation of the polymers

Polymers of the invention may be prepared by esterification of a hydroxy compound with a polycarboxylic acid or anhydride, if necessary in the presence of an esterification catalyst.

Esterification may either precede or follow polymerisation. There are thus two general routes for preparation of polymeric compounds of the invention:

(i) esterification of a polymeric polyhydroxy compound with a polycarboxylic acid or anhydride,

(ii) esterification of an alcohol containing a polymerisable functionality (generally an unsaturated alcohol) with a polycarboxylic acid or anhydride, and subsequent radical polymerisation.

The preferred polymers of the formula II above are suitably prepared by method (i). Polyvinyl alcohol (or partially hydrolysed polyvinyl acetate) is reacted with citric anhydride, or in favourable cases with hydrated citric acid.

The preferred polymers of the formula III above are more suitably prepared by method (ii). Allyl alcohol or α-hydroxymethyl acrylic acid is reacted with citric anhydride or citric acid and the product is then polymerised. Other polymerisable comonomers may be present to give copolymers or terpolymers containing additional units as described above.

Esterification

Esters of citric acid with polymeric (poly)hydroxy compounds may be prepared under various conditions, with or without solvent, using citric acid or citric anhydride, in the presence or absence of an esterification catalyst.

The (poly)hydroxy compound may, for example, be reacted with citric acid or citric anhydride, in the absence of solvent (if it is a liquid), or in solution in an organic solvent such as dioxan, tetrahydrofuran or dimethylformamide; if necessary, an esterification catalyst may be present. In a variant of this process, the (poly)hydroxy compound may be reacted with citric acid (preferably hydrated) in the melt in a vacuum oven.

Suitable esterification catalysts include toluene sulphonic acid, 4-dimethylaminopyridine, trimethylamine, sodium acetate, zinc acetate, tetrabutyl titanat, tetraisobutyl titanate, calcium oxide, calcium carbonate, aluminium isopropoxide, aluminium tri-t-butoxide, ferric acetylacetate, diethyl zinc (15 wt% solution in toluene), cadmium acetate hydrate, ferric chloride, barium oxide, ferric hydroxide, and antimony trioxide.

According to another suitable process, the alkoxide of the (poly)hydroxy compound is reacted with citric anhydride, preferably in an organic solvent such as dioxan, tetrahydrofuran or dimethylformamide.

Citric anhydride may be prepared from anhydrous citric acid, glacial acetic acid and acetic anhydride, as described by Repta and Higuchi in J Pharm Sci 1969 58 (9) 1110.

However, one method that has proved especially effective for the preparation of allyl citrate is the simple mixture of allyl alcohol (≥ 1 equivalents) and citric acid (either anhydrous or hydrated), followed by heating at moderate temperatures, preferably at reflux temperatures, in the presence or absence of an esterification catalyst (for example, toluene sulphonic acid). This method gives a pure product which can easily be isolated by the removal of excess allyl alcohol, for example, in vacuo. The reaction time can vary from one to several hours depending whether or not a catalyst is used, and if so in what amount.

This method avoids the necessity for the citric anhydride intermediate, and has the advantage that azeotropic distillation is not required. The product is a single isomer, generally in a yield of at least 95 wt%, while the other methods mentioned above give a mixture of isomers.

Polymerisation

Polymerisation of monomeric citrate esters, for example allyl citrate, the starting material for the preparation of the preferred polymers of the formula III mentioned above, may be carried out by conventional bulk or solution polymerisation techniques, in the presence of a radical initiator.

Suitable radical initiators include, for example, sodium or potassium persulphate, 2,2-azobis(amidinopropane) hydrochloride, dibenzoyl peroxide (Lucidol), cyclohexanone peroxide, di-tert-butyl peroxide, 2,2-azobis-isobutyronitrile (AIBN), cyclohexylsulphonyl peroxide (Percadox ACS), diisopropylperdicarbonate (Percadox JPP), and cumene hydroperoxide. Preferred initiators are sodium or potassium persulphate, and 2,2-azobis(amidinopropane) hydrochloride. The initiator is preferably added gradually to the reaction mixture. The preferred polymerisation temperature range is between 40 and 120°C.

It has been found that when a high-molecular-weight product is desired the initiator is advantageously added gradually, in small amounts over an extended period, for example twelve hours.

If higher molecular weight branched materials are desired, there may be included in the monomer mixture a small amount of a branching agent, for example, butanedioldiacrylate, divinyl benzene, glycoldivinyl ether, adipic acid divinyl ether, bisphenol A dimethacrylate, divinyl 2,4,8,10-tetraoxospiro [5.5] undecane, pentaerythritol triacrylate, acrylamidomethyl dextrin (DP6 3108 ex Allied Colloids), divinyl ether, or vinyl allyl ether.

Detergent compositions

The novel detergency builders of the present invention may be incorporated in detergent compositions of all physical types, for example, powders, liquids, gels, and solid bars. They may if desired be used in conjunction with other detergency builders.

The total amount of detergency builder in the compositions may suitably range from 15 to 80 wt%, and this may be constituted wholly or partially by the polycarboxylate compounds of the invention.

Inorganic builders that may be present include sodium carbonate, if desired in combination with a crystallisation seed for calcium carbonate, as disclosed in GB 1 437 950 (Unilever); crystalline and amorphous aluminosilicates, for example, zeolites as disclosed in GB 1 473 201 (Henkel), amorphous aluminosilicates as disclosed in GB 1 473 202 (Henkel) and mixed crystalline/amorphous aluminosilicates as disclosed in GB 1 470 250 (Henkel); and layered silicates as disclosed in EP 164 514B (Hoechst). Inorganic phosphate builders, for example, sodium orthophosphate, pyrophosphate and tripolyphosphate, may also be present, but the invention is of particular applicability to compositions containing reduced or zero levels of inorganic phosphate.

Organic builders that may be present include other polycarboxylates, for example, polymers such as polyacrylates, acrylic/maleic copolymers, and acrylic phosphinates; or monomeric polycarboxylates such as citrates, gluconates, oxydisuccinates, tartrate monosuccinates and disuccinates, glycerol mono-, di- and trisuccinates, carboxymethyloxysuccinates, carboxymethyloxymalonates, dipicolinates, hydroxyethyliminodiacetates, nitrilotriacetates, ethylenediaminetetraacetates, alkyl- and alkenyl malonates and succinates, and sulphonated fatty acid salts.

Detergent compositions of the invention will also contain, as essential ingredients, one or more detergent-active compounds which may be chosen from soap and non-soap anionic, cationic, nonionic, amphoteric and zwitterionic detergent-active compounds, and mixtures thereof. Many suitable detergent-active compounds are available and are fully described in the literature, for example, in "Surface-Active Agents and Detergents", Volumes I and II, by Schwartz, Perry and Berch.

The preferred detergent-active compounds that can be used are soaps and synthetic non-soap anionic and nonionic compounds.

Anionic surfactants are well known to those skilled in the art. Examples include alkylbenzene sulphonates, particularly sodium linear alkylbenzene sulphonates having an alkyl chain length of $C_8$-$C_{15}$; primary and secondary alkyl sulphates, particularly sodium $C_{12}$-$C_{15}$ primary alcohol sulphates; alkyl ether sulphates; olefin sulphonates; alkane sulphonates; alkyl xylene sulphonates; dialkyl sulphosuccinates; and fatty acid ester sulphonates.

Nonionic surfactants that may be used include the primary and secondary alcohol ethoxylates, especially the $C_{12}$-$C_{15}$ primary and secondary alcohols ethoxylated with an average of from 3 to 20 moles of ethylene oxide per mole of alcohol; and alkylpolyglycosides.

The choice of surfactant, and the amount present, will depend on the intended use of the detergent composition. For example, for machine dishwashing a relatively low level of a low-foaming nonionic surfactant is generally preferred. In fabric washing compositions, different surfactant systems may be chosen, as is well known by the skilled detergent formulator, for handwashing products and for machine washing products.

The total amount of surfactant present will of course depend on the intended end use and may be as low as 0.5% by weight, for example in a machine dishwashing composition, or as high as 60% by weight, for example in a composition for washing fabrics by hand. For fabric washing compositions in general, an amount of from 5 to 40% by weight is generally appropriate.

Detergent compositions suitable for use in most automatic fabric washing machines generally contain anionic non-soap surfactant, or nonionic surfactant, or combinations of the two in any ratio, optionally together with soap.

Detergent compositions according to the invention may also suitably contain a bleach system. Machine dishwashing compositions may suitably contain a chlorine bleach, while fabric washing compositions may contain peroxy bleach compounds, for example, inorganic persalts or organic peroxyacids, which may be employed in conjunction with activators to improve bleaching action at low wash temperatures.

Preferred inorganic persalts for inclusion in fabric washing compositions are sodium perborate monohydrate and tetrahydrate, and sodium percarbonate, advantageously employed together with an activator. Bleach activators, also referred to as bleach precursors, have been widely disclosed in the art. Preferred examples include peracetic acid precursors, for example, tetraacetylethylene diamine, now in widespread commercial use in conjunction with sodium perborate; and perbenzoic acid precursors. The novel quaternary ammonium and phosphonium bleach activators disclosed in US 4 751 015 and US 4 818 426 (Lever Brothers Company) are also of great interest.

Other materials that may be present in detergent compositions of the invention include sodium silicate, fluorescers, antiredeposition agents, inorganic salts such as sodium sulphate, enzymes, lather control agents or lather boosters as appropriate, pigments, and perfumes.

Detergent compositions of the invention may be prepared by any suitable method. Detergent powders are suitably prepared by spray-drying a slurry of compatible heat-insensitive components, and then spraying on or postdosing those ingredients unsuitable for processing via the slurry. The skilled detergent formulator will have no difficulty in deciding which components should be included in the slurry and which should be postdosed or sprayed on. The novel builders of the invention may generally be included in the slurry if desired, although other methods of incorporation may of course be used if desired.

## EXAMPLES

The invention will now be further illustrated by the following Examples.

### Characterisation of the polymers

The polymers were characterised by infrared spectrometry and in some cases by nuclear magnetic resonance spectroscopy.

The infrared instrumentation used included the Nicolet (Trade Mark) 1705X Fourier Transform infrared spectrometer with MCT detector using the Nicolet 1280 processor, and the Nicolet SDXC Fourier Transform infrared spectrometer with DGS detector using the Nicolet 62 processor.

$^{13}C$ NMR spectra were run on a Brucker (Trade Mark) WM 360 MHz Fourier Transform spectrometer.

Number-average and weight-average molecular weights of polymeric materials were determined by gel permeation chromatography. This was carried out using a Hewlett Packard (Trade Mark) HP 1090 liquid chromatograph fitted with a 30 cm x 7.5 cm TSK gel linear GMPW column. Organic-solvent-soluble polymers were measured against polystyrene standards, and water-soluble polymers against polyethylene glycol.

### Calcium binding

The calcium binding properties of the polymers were measured by titration of the samples with a calcium chloride solution using a calcium-ion-selective electrode of the type Radiometer (Trade Mark) F2112Ca. The calcium binding constant $pK_{Ca}2+$ was calculated by the method of C Tanford in Chapter 8, Multiple Equilibria, Physical Chemistry of Macromolecules, John Wiley, New York, 1961.

Values of $pK_{Ca}2+$ of 4.0 or above represent materials likely to be useful as detergency builders, either alone or in conjunction with other builder materials.

### Example 1: polyvinyl citrate

Polyvinyl citrate was prepared by esterification of polyvinyl alcohol (containing some residual acetate groups) with citric anhydride.

The polymer, of the formula XVI shown below, in which p, q and r represent integers and M is a sodium ion, contained units within the formula II as defined previously, as well as unconverted vinyl alcohol and vinyl acetate units. The degree of substitution by citrate groups was 40-50%.

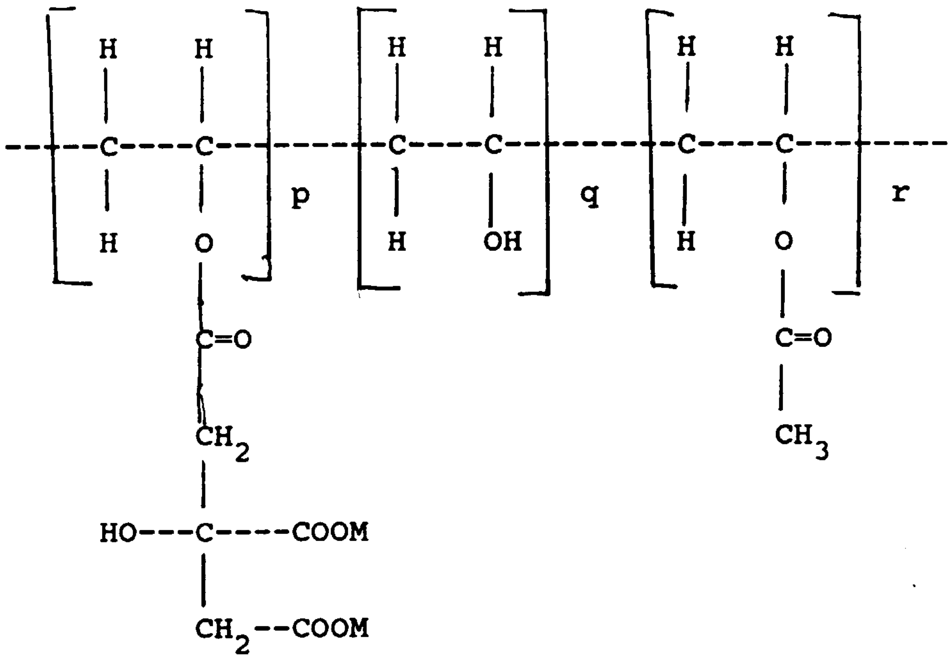

(XVI)

Citric anhydride was first prepared as follows. Anhydrous citric acid (183 g, 0.953 mole), glacial acetic acid (90 g, 1.50 mole) and acetic anhydride (194.4 g, 1.90 mole) were charged to a 1-litre three-necked round-bottomed flask equipped with an efficient stirrer and a reflux condenser, and heated at 40°C for 60 hours. During this time the solution became more viscous and a pale straw colour developed. Hot chloroform was then added with stirring, and after 2 hours of continuous stirring a white crystalline solid precipitated. The solid was filtered off under vacuum, taking care to avoid contact with atmospheric moisture, washed with cold chloroform, and stored over potassium hydroxide pellets in a vacuum desiccator.

The yield was 72 g, and the melting point of the product was 112-114°C.

Infrared data (KBr wafer) were as follows:

| | |
|---|---|
| Anhydride group: | C=O str 1790 and 1860 $cm^{-1}$<br>C=O str 1240 $cm^{-1}$ |
| Carboxylic acid group: | H-bonding 3300-2500 $cm^{-1}$<br>C=O str 1700 $cm^{-1}$ |
| Alcoholic group: | OH str 3500 $cm^{-1}$<br>C-O str 1130 $cm^{-1}$ (tert) |
| Ester group: | 1740 $cm^{-1}$ |

Polyvinyl alcohol (molecular weight 14 000, 4.4 g, 0.1 mole), citric anhydride (17.4 g, 0.1 mole) and dimethylformamide (20 ml) were placed in a two-necked round-bottomed flask equipped with a mechanical stirrer and a condenser, and the reactants were heated to 100°C in an oil bath and maintained at that temperature for 24 hours. The product was a sticky brown solid which was neutralised using aqueous sodium hydroxide solution. The resulting polymer salt was purified by triple precipitation into excess methanol and isolated by freeze drying. The yield was 9.61 g.

The polymer was characterised by Fourier transform infrared spectrometry (KBr wafer) as previously indicated:

| | |
|---|---|
| Short chain carboxylate (C=O str) | 1600 $cm^{-1}$ |
| Ester (C=O str) | 1720 $cm^{-1}$ |

Molecular weights and calcium binding results were as follows:

| Example | Molecular weight | | | $pK_{Ca}2+$ |
|---|---|---|---|---|
| | $M_n$ | $M_w$ | D | |
| 1 | 5 400 | 22 600 | 4.19 | 4.9 |

Example 2: polyvinyl citrate

A polymer of the formula XVI given in Example 1 was prepared by a different method using citric acid instead of citric anhydride.

Polyvinyl alcohol (4.4 g, 0.1 mole) and citric acid monohydrate (21.04 g, 0.1 mole) were ground together to a fine texture and placed in a large crystallising dish. The dish was placed in a vacuum oven at 130°C for 24 hours. After cooling to room temperature, the product was neutralised to pH 7, and the polymer was recovered by precipitation into excess methanol. The polymer salt was recovered by filtration and dried; the yield was 15.7 g.

The polymer was characterised by Fourier transform infrared spectrometry (KBr wafer) as previously indicated:

| | |
|---|---|
| Short chain carboxylate (C=O str) | 1600 $cm^{-1}$ |
| Ester (C=O str) | 1724 $cm^{-1}$ |

Molecular weights and calcium binding results were as follows:

| Example | Molecular weight | | | $pK_{Ca}2+$ |
|---|---|---|---|---|
| | $M_n$ | $M_w$ | D | |
| 2 | 2900 | 18 200 | 6.27 | 4.6 |

Example 3: polyvinyl citrate

A polymer of the formula XVI given in Example 1 was prepared by a different method using sodium hydride.

Polyvinyl alcohol (4.4 g, 0.1 mole), sodium hydride (2.8 g, 0.12 mole) and tetrahydrofuran (30 ml) were charged into a three-necked round-bottomed flask equipped with a mechanical stirrer and a nitrogen inlet, and the reactants stirred under an atmosphere of nitrogen for 2 hours. Citric anhydride (17.4 g, 0.1 mole) and a further 120 ml of tetrahydrofuran were then added, and the system refluxed for a further 24 hours. Solvent was removed by rotary evaporation and the polymer hydrolysed with aqueous sodium hydroxide solution. The resulting polymer salt was purified by triple precipitation into excess methanol and isolated by freeze drying. The yield was 11.98 g.

The polymer was characterised by Fourier transform infrared spectrometry (KBr wafer) as previously indicated:

| | |
|---|---|
| Short chain carboxylate (C=O str) | 1600 $cm^{-1}$ |
| Ester (C=O str) | 1720 $cm^{-1}$ |

Molecular weights and calcium binding results were as follows:

| Example | Molecular weight | | | $pK_{Ca}2+$ |
|---|---|---|---|---|
| | $M_n$ | $M_w$ | D | |
| 2 | 1 750 | 2 400 | 1.38 | 4.1 |

Examples 4 to 7: polyallyl citrate

Allyl citrate was prepared by esterification of allyl alcohol with citric anhydride, and then polymerised. The resulting polymer, of the formula XVII shown below, in which p represents an integer and M a sodium ion, contained units within the formula III as defined previously.

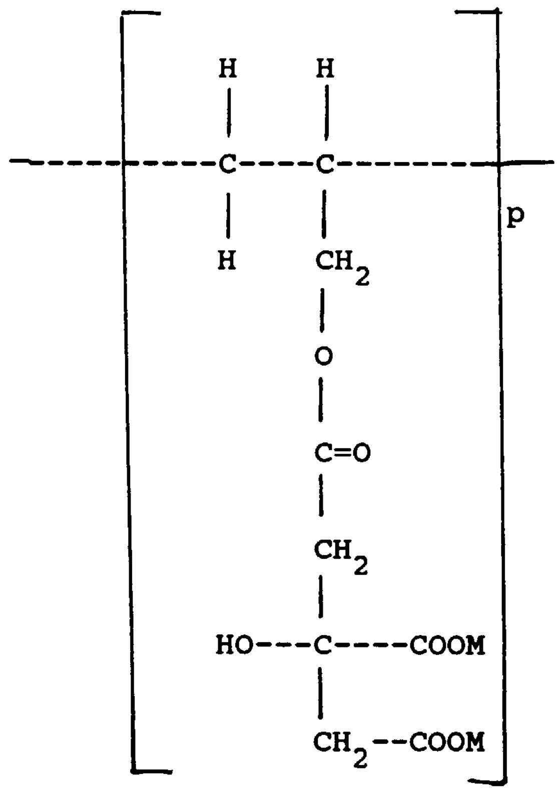

(XVII)

Allyl citrate was first prepared as follows. Citric anhydride prepared as in Example 1 (34.83 g, 0.20 mole), and allyl alcohol (12.76 g, 0.22 mole, ie a 10 mole% excess) were charged into a 100 ml flask equipped with an efficient stirrer and a reflux condenser, and the reagents were heated at 90°C for 24 hours during which time the sticky white solid became a viscous yellow oil.

After cooling to room temperature, the oil was rotary-evaporated to constant weight to remove unreacted allyl alcohol; the product thus obtained was sufficiently pure for use in subsequent polymerisation reactions.

Infrared data (KBr wafer) were as follows:

| | |
|---|---|
| Ester C=O str | 1740 $cm^{-1}$ |
| Ester C-O str | 1200 $cm^{-1}$ |
| COOH | 1710 $cm^{-1}$ (shoulder) |
| OH | 2800-3600 $cm^{-1}$ |

$^{13}C$ NMR data at 90.55 MHz, obtained from a sample prepared by dissolving in $CDCl_3$ and then adding DMSO-$d_6$ until a clear solution was obtained, were as follows: 620-22, 638-45, 664-69, 672-75, 6117-120, 6130-134, 6168-176 ppm.

The allyl citrate was polymerised as follows. 10 g (43 mmole), water (100 ml) and sodium dodecyl sulphate (1 g, 10 mole%), were charged to a 250 ml flask equipped with an efficient stirrer, reflux condenser, and an inlet for nitrogen gas. The resulting solution was degassed with nitrogen (oxygen-free) while heating to 70°C over the course of 45 minutes. Sodium persulphate solution (0.1 g in 5 ml water) was then added. The reagents were then maintained at 70°C for 40 hours under a slow stream of nitrogen. The resulting polymer was purified by triple precipitation into excess methanol followed by freeze drying. The yield was 8.61 g.

Molecular weights and calcium binding results were as follows:

| Example | Molecular weight | | | $pK_{Ca}2+$ |
|---|---|---|---|---|
| | $M_n$ | $M_w$ | D | |
| 4 | 2 200 | 11 150 | 5.07 | 5.23 |

For characterisation and handling of the polymer it was found beneficial to convert it to the sodium salt. This was carried out by neutralising an aqueous solution of the polymer with aqueous sodium hydroxide solution, then freeze

drying the resulting solution to yield a fine white powder, poly(disodium allyl citrate).
Infrared data (KBr wafer) were as follows:

| | |
|---|---|
| Short-chain polycarboxylate (C=O str) | 1600 $cm^{-1}$ |
| Ester group (C=O str) | 1740 $cm^{-1}$ |
| Alcohol (OH str) | 3500 $cm^{-1}$ |

Examples 5 to 7: polyallyl citrate

Three more polymers of the formula XVII given above were prepared by similar methods. Molecular weights and calcium binding results were as follows:

| Example | Molecular weight | | | $pK_{Ca}2+$ |
|---|---|---|---|---|
| | $M_n$ | $M_w$ | D | |
| 5 | 2 600 | 9 100 | 3.5 | 5.20 |
| 6 | 1 700 | 2 800 | 1.65 | 4.88 |
| 7 | 1 250 | 1 900 | 1.52 | 4.28 |

Examples 8 and 9: polyallyl citrate

Two further polymers of the formula XVII given above, but of higher molecular weight, were prepared by a method similar to that previously described, but the initiator was added gradually in small amounts over a long period (1 wt% every 2 hours, up to a maximum of 6 wt%). Molecular weights and calcium binding data were as follows:

| | $M_n$ | $M_w$ | D | $pK_{Ca}2+$ |
|---|---|---|---|---|
| 8 | 13 250 | 62 100 | 4.70 | 6.3 |
| 9 | 13 300 | 52 700 | 3.96 | 6.3 |

The allyl citrate used in these two Examples was prepared by a different method from that used in Examples 4 to 7: a direct method using citric acid (hydrated or anhydrous) rather than citric anhydride. Allyl alcohol (≥1 equivalents) and citric acid were simply mixed, followed by heating at reflux temperature in the presence of the esterification catalyst, toluene sulphonic acid. This method gave a pure product which could easily be isolated by the removal of excess allyl alcohol in vacuo. The reaction time was about 1 hour, and a single isomer was obtained in a yield of above 95 wt%. The product was characterised by NMR as follows:

$^1H$ NMR (deuterium oxide):

| Chemical shift (ppm) | | |
|---|---|---|
| δ 2.7-3.3 | citrate protons (multiplet) | 4H |
| δ 4.6 | $CH_2$-O | 2H |
| δ 5.3-6.3 | allyl protons (complex) | 3H |

$^{13}C$ NMR (deuterium oxide):

Chemical shift (ppm)
δ 44-76
δ 120-135
δ 172-180

Example 10: allyl citrate/acrylic acid copolymer

A polymer was prepared by copolymerisation of allyl citrate and acrylic acid. The polymer, of the formula XVIII

shown below in which p and q are integers and M is a sodium ion, contained units within the formulae III and V defined previously.

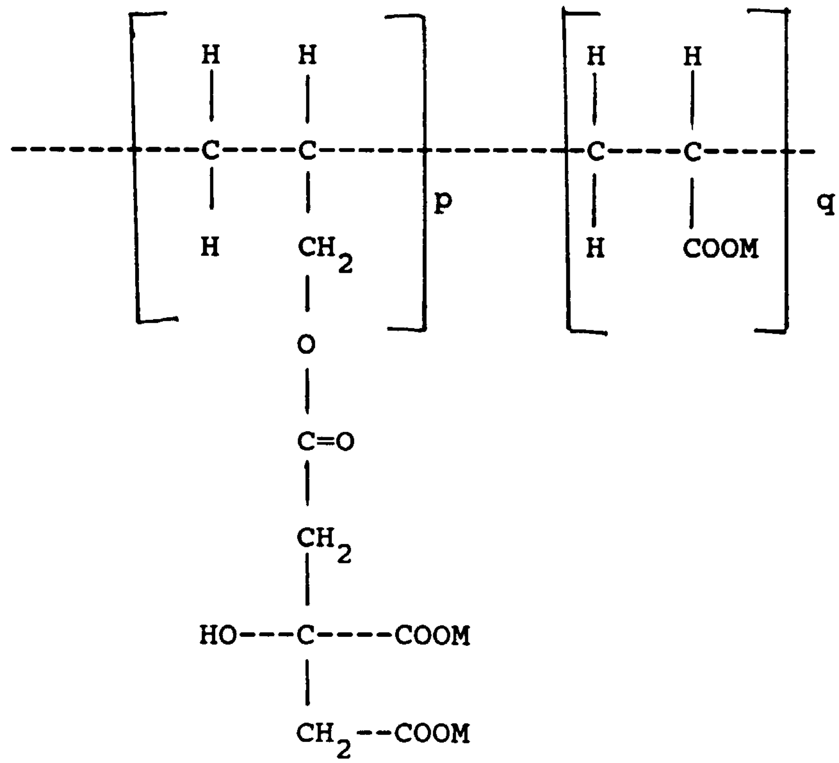

(XVIII)

A flange flask equipped with a mechanical stirrer, a condenser and an inlet for nitrogen gas was charged with allyl citrate (4.87 g, 22 mmole), acrylic acid (1.51 g, 21 mmole), sodium dodecyl sulphate (200 mg in 20 ml water) and water (100 ml). Nitrogen gas was bubbled through the reactant mixture for 30 minutes. The flask was then placed in a water bath at 65°C for 24 hours. The solution was then neutralised with aqueous sodium hydroxide solution and the polymer was purified by triple precipitation into excess methanol and isolated by freeze drying. The yield was 6.1 g.

Infrared data (KBr wafer) were as follows:

| | | |
|---|---|---|
| Short chain carboxylate | (C=O str) | 1600 $cm^{-1}$ |
| Ester | (C=O str) | 1734 $cm^{-1}$ |

Molecular weights and calcium binding results were as follows:

| Example | Molecular weight | | | $pK_{Ca}2+$ |
|---|---|---|---|---|
| | $M_n$ | $M_w$ | D | |
| 10 | 1 400 | 2 700 | 1.93 | 5.23 |

Example 11: allyl citrate/maleic acid copolymer

A polymer was prepared by copolymerisation of allyl citrate and maleic anhydride. The polymer, of the formula XIX shown below in which p and q are integers and M is a sodium ion, contained units within the formulae III and VI defined previously.

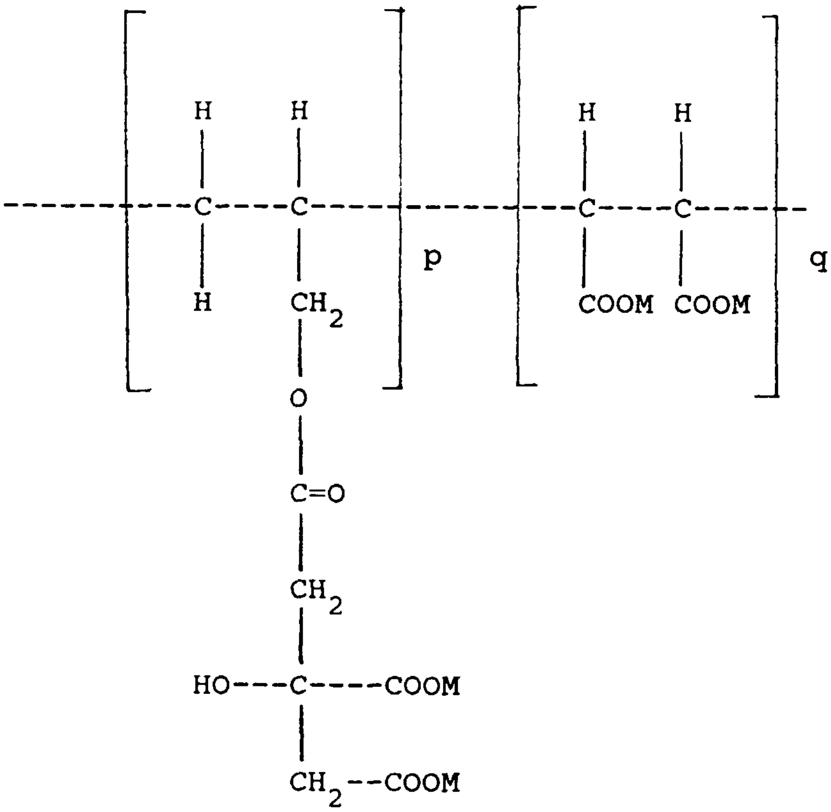

(XIX)

Allyl citrate (10 g, 43 mmole), maleic anhydride (4.2 g, 43 mmole), azo-bisisobutyronitrile (150 mg) and dioxan (10 ml) were charged to an evacuable Pyrex sealed tube reactor. On evacuation, the tube was placed in a thermostatted bath at 70°C for 48 hours. The resulting solid was hydrolysed with aqueous sodium hydroxide solution to pH 7, taking care not to exceed pH 8. The polymer sodium salt was then purified by triple precipitation into excess methanol, followed by freeze drying to give a white powder. The yield was 11.54 g.

Molecular weights and calcium binding results were as follows:

| Example | Molecular weight | | | $pK_{Ca}2+$ |
|---|---|---|---|---|
| | $M_n$ | $M_w$ | D | |
| 11 | 6 150 | 16 950 | 2.76 | 5.41 |

Example 12: allyl citrate/maleic acid copolymer

A polymer of the formula XIX given in Example 11 was prepared by a similar method. The molecular weight and calcium binding results were as follows:

| Example | Molecular weight | | | $pK_{Ca}2+$ |
|---|---|---|---|---|
| | $M_n$ | $M_w$ | D | |
| 10 | 6 100 | 65 000 | 10.65 | 6.63 |

Example 13: allyl citrate/α-hydroxyacrylic acid copolymer

Allyl citrate can be copolymerised with α-chloroacrylic acid in bulk or solution in the presence of a suitable radical initiator at moderate temperatures, without the need for extensive purification techniques; the resulting chlorinated copolymer is then converted to the corresponding hydroxylated copolymer.

This Example describes the preparation of a polymer of the formula XX shown below, in which p and q are integers and M is a sodium ion, containing units within the formulae III and X defined previously.

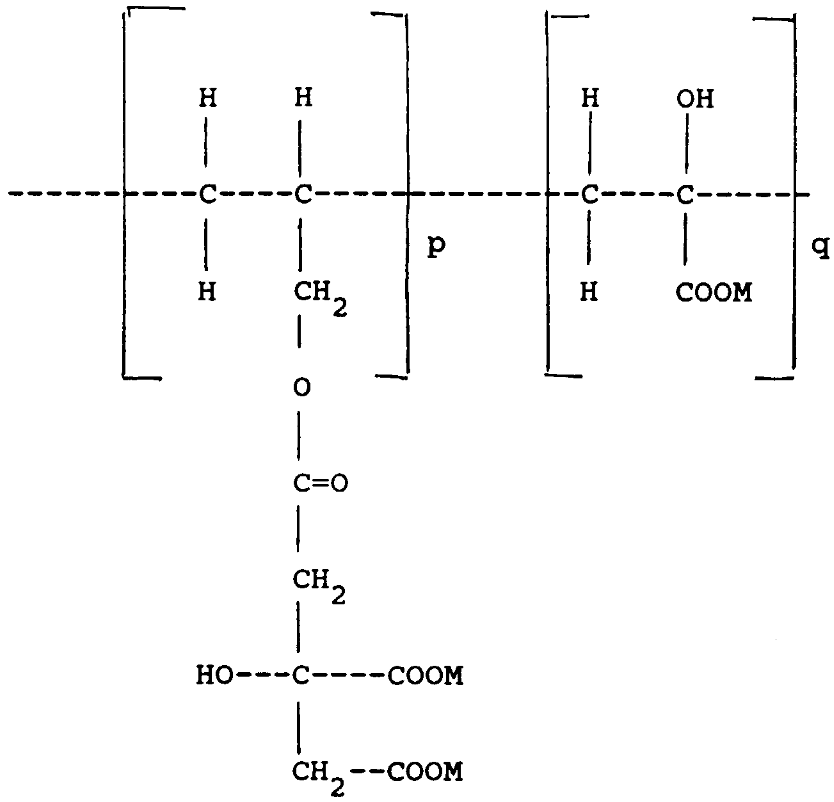

(XX)

Allyl citrate (11.6 g, 0.05 mole), α-chloroacrylic acid (5.33 g, 0.05 mole), azo-bisisobutyronitrile (300 mg) and dioxan (10 ml) were charged into an evacuable Pyrex sealed tube reactor. On evacuation, the tube was placed in a thermostatted bath at 60°C for 48 hours. The solid product was dissolved in acetone and triply precipitated into an excess of petroleum ether. The solid obtained (12 g) was refluxed for 5 hours on a steam bath with 200 ml water. The resulting solution was neutralised to pH 7 with aqueous sodium hydroxide solution and the polymer salt purified by triple precipitation into excess methanol and then isolated by freeze drying. The yield was 13.04 g.

Infrared data (KBr wafer) were as follows:

| | |
|---|---|
| Short chain carboxylate (C=O str) | 1600 $cm^{-1}$ |
| Ester group (C=O str) | 1736 $cm^{-1}$ |
| Hydroxyl group (OH str) | 3500 $cm^{-1}$ |

Molecular weights and calcium binding results were as follows:

| Example | Molecular weight | | | $pK_{Ca}2+$ |
|---|---|---|---|---|
| | $M_n$ | $M_w$ | D | |
| 10 | 2 800 | 91 450 | 32.66 | 5.11 |

Example 14: allyl citrate/itaconic acid copolymer

A polymer was prepared by copolymerisation of allyl citrate and itaconic acid. The polymer, of the formula XXI shown below in which p and q are integers and M is a sodium ion, contained units within the formulae III and IV defined previously.

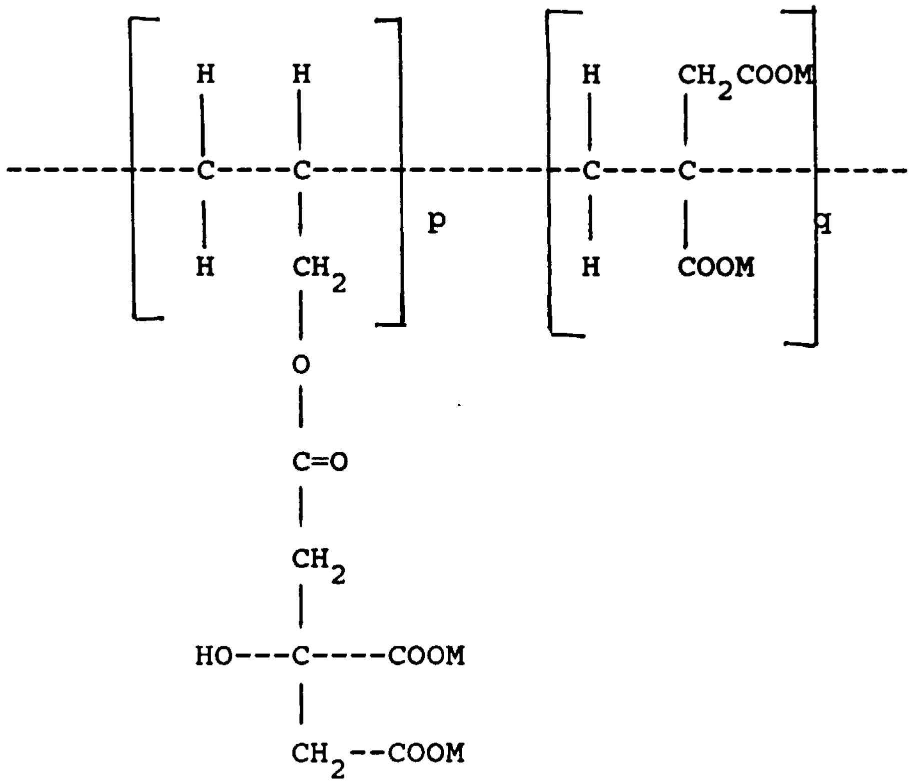

(XXI)

Into a 500 ml flask equipped with mechanical stirrer, condenser and an inlet for nitrogen gas, were charged allyl citrate (7.0 g, 0.03 mole), itaconic acid (3.92 g, 0.03 mole), sodium dodecyl sulphate (0.05 g in 50 ml water), and 200 ml water. An inert atmosphere was created by bubbling nitrogen gas through the reaction mixture for 30 minutes prior to stirring. The flask was placed in a thermostatted bath at 65°C. After 30 minutes, sodium persulphate (0.1 g in 2 ml water) was added and the solution stirred for 18 hours. A further aliquot of sodium persulphate solution was then added and the reaction continued for a further 8 hours. The solution was then neutralised with aqueous sodium hydroxide solution and the polymer purified by triple precipitation into excess methanol. The resulting polymer salt was isolated by freeze drying. The yield was 6.7 g.

Infrared data (KBr wafer) were as follows:

| | |
|---|---|
| Short chain carboxylate | 1600 $cm^{-1}$ |

Molecular weights and calcium binding results were as follows:

| Example | Molecular weight | | | $pK_{Ca}2+$ |
|---|---|---|---|---|
| | $M_n$ | $M_w$ | D | |
| 14 | 2 200 | 4 000 | 1.82 | 5.73 |

**Claims**

1. A polycarboxylate polymer having a number average molecular weight of from 1000 to 100 000 and a weight average molecular weight of from 1000 to 1 000 000, which polymer contains at least one unit of the formula I:

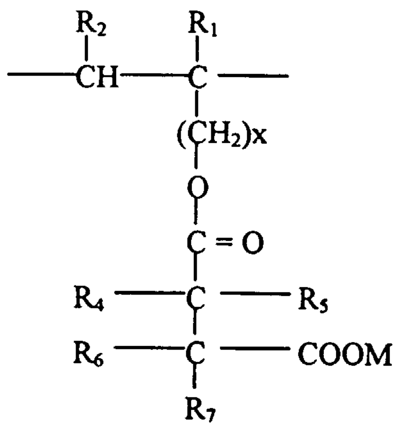

(I)

wherein x is 0, 1 or 2; the R groups represent hydrogen atoms, hydroxyl groups, carboxyl groups, $C_1$-$C_3$ alkyl groups, $C_1$-$C_3$ hydroxyalkyl groups, $C_1$-$C_3$ carboxyalkyl groups, or a hydroxycarboxymethyl group, provided that at least one of $R_4$, $R_5$, $R_6$ and $R_7$ contains a -COOM group; and M is a hydrogen atom or a solubilising cation.

**2.** A polymer as claimed in claim 1, characterised in that it contains at least one unit of the formula II:

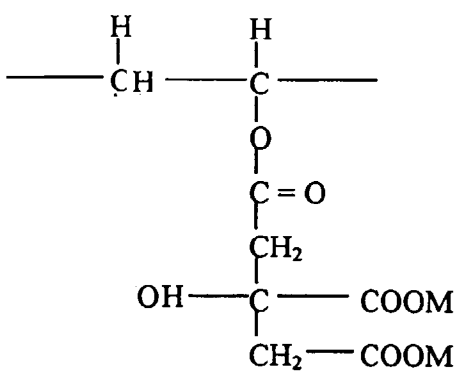

(II)

wherein M has the meaning given in claim 1.

**3.** A polymer as claimed in claim 2, characterised in that it comprises polyvinyl citrate.

**4.** A polymer as claimed in claim 1, characterised in that it contains at least one unit of the formula III:

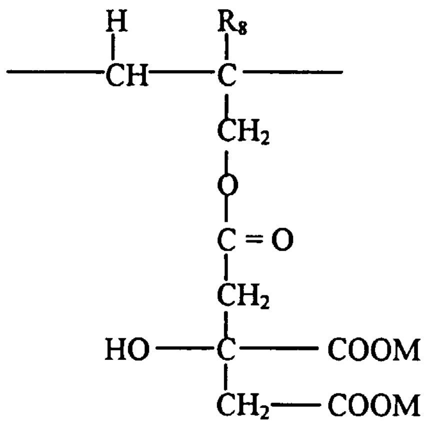

(III)

wherein $R_8$ represents a hydrogen atom or a -COOM group, and M has the meaning given in claim 1.

**5.** A polymer as claimed in claim 4, characterised in that it comprises an ester of polyallyl alcohol with citric acid, or a salt thereof.

**6.** A polymer as claimed in claim 5, characterised in that it comprises an ester of poly(α-hydroxymethylacrylic) acid with citric acid, or a salt thereof.

**7.** A polymer as claimed in any preceding claim, characterised in that it further comprises one or more units of any one or more of the formulae IV to IX:

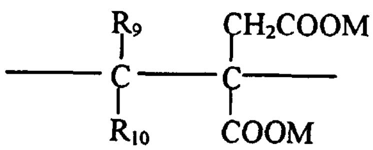

(IV)

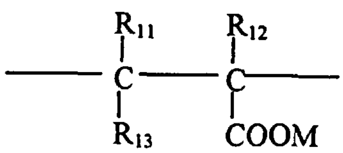

(V)

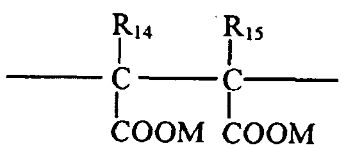

(VI)

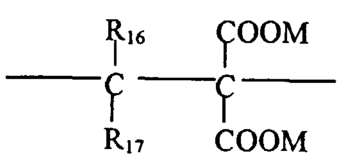

(VII)

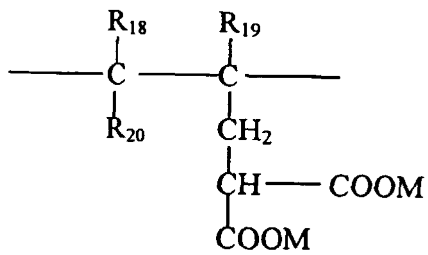

(VIII)

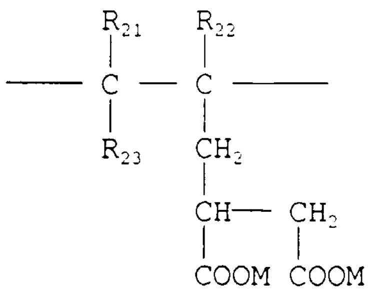

(IX)

wherein the R groups are hydrogen atoms, methyl groups or ethyl groups, in any combination, and M represents a hydrogen atom or a solubilising cation.

**8.** A polymer as claimed in claim 7, characterised in that each of the R groups represents a hydrogen atom.

**9.** A polymer as claimed in claim 8, comprising units of the formula III and units of the formula IV, characterised in that it is a copolymer of allyl citrate and itaconic acid, or a salt thereof.

**10.** A polymer as claimed in claim 8, comprising units of the formula III and units of the formula V, characterised in that it is a copolymer of allyl citrate and acrylic acid, or a salt thereof.

**11.** A polymer as claimed in claim 8, comprising units of the formula III and units of the formula VI, characterised in that it is a copolymer of allyl citrate and maleic acid, or a salt thereof.

**12.** A polymer as claimed in any preceding claim, characterised in that it further comprises one or more unit of any one or more of the formulae X to XV:

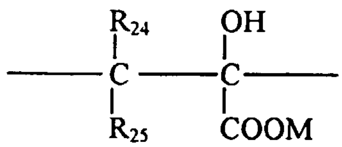

(X)

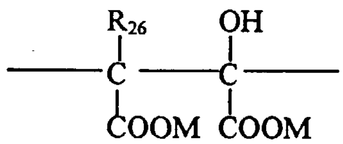

(XI)

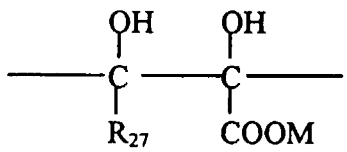

(XII)

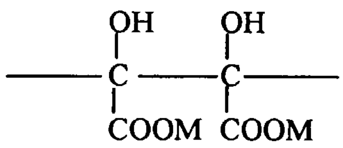

(XIII)

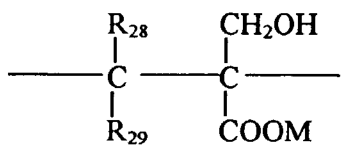

(XIV)

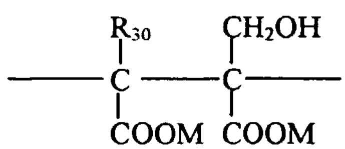

(XV)

wherein each of the R groups, which may be the same or different, represents a hydrogen atom, a methyl group or an ethyl group, and M represents a hydrogen atom or a solubilising cation.

**13.** A polymer as claimed in claim 12, characterised in that each of the R groups represents a hydrogen atom.

**14.** A polymer as claimed in claim 13, comprising units of the formula III and units of the formula X, characterised in that it is a copolymer of allyl citrate and $\alpha$-hydroxyacrylic acid, or a salt thereof.

**15.** A polymer as claimed in any preceding claim, characterised in that it is in sodium salt form.

**16.** Use of a polymer as claimed in any preceding claim to bind divalent and polyvalent metals.

**17.** A detergent composition comprising at least one detergent-active compound and at least one detergency builder, characterised in that the detergency builder consists wholly or partially of a polymer as claimed in any one of claims 1 to 15.

**18.** A detergent composition as claimed in claim 17, characterised in that it comprises from 0.5 to 60 wt% of detergent-active compound and from 15 to 80 wt% of detergency builder, and optionally other detergent ingredients to 100 wt%.

**Patentansprüche**

**1.** Polycarboxylatpolymer mit einem zahlenmittleren Molekulargewicht von 1000 bis 100 000 und einem gewichtsmittleren Molekulargewicht von 1 000 bis 1 000 000, wobei das Polymer mindestens eine Einheit der Formel I enthält:

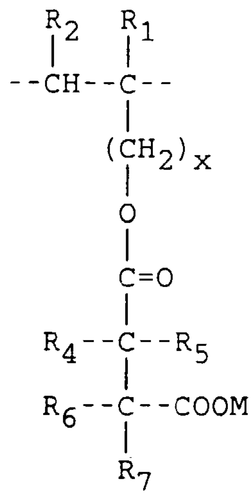

(I)

worin x 0, 1 oder 2 bedeutet; die R-Gruppen Wasserstoffatome, Hydroxylgruppen, Carboxylgruppen, $C_1$-$C_3$-Alkylgruppen, $C_1$-$C_3$-Hydroxyalkylgruppen, $C_1$-$C_3$-Carboxyalkylgruppen oder eine Hydroxycarboxymethylgruppe wiedergeben, mit der Maßgabe, daß mindestens ein Rest von $R_4$, $R_5$, $R_6$ und $R_7$ eine -COOM-Gruppe enthält; und M ein Wasserstoffatom oder ein löslichmachendes Kation bedeutet.

**2.** Polymer nach Anspruch 1, dadurch gekennzeichnet, daß es mindestens eine Einheit der Formel II enthält:

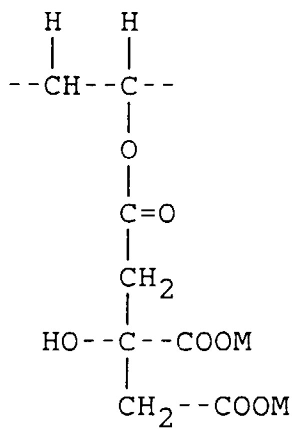

(II)

worin M die in Anspruch 1 angegebene Bedeutung aufweist.

**3.** Polymer nach Anspruch 2, dadurch gekennzeichnet, daß es Polyvinylcitrat umfaßt.

**4.** Polymer nach Anspruch 1, dadurch gekennzeichnet, daß es mindestens eine Einheit der Formel III enthält:

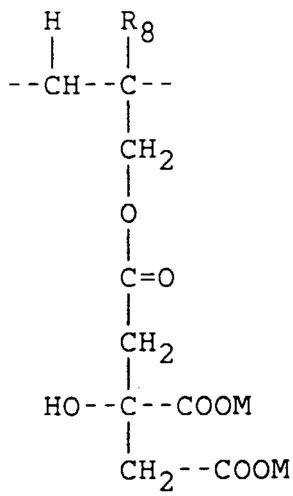

(III)

worin $R_8$ ein Wasserstoffatom oder eine -COOM-Gruppe bedeutet und M die in Anspruch 1 angegebene Bedeutung aufweist.

**5.** Polymer nach Anspruch 4, dadurch gekennzeichnet, daß es einen Ester von Polyallylalkohol mit Zitronensäure umfaßt oder ein Salz davon.

**6.** Polymer nach Anspruch 5, dadurch gekennzeichnet, daß es einen Ester von Poly($\alpha$-hydroxymethylacrylsäure) mit Zitronensäure umfaßt oder ein Salz davon.

**7.** Polymer nach einem vorangehenden Anspruch, dadurch gekennzeichnet, daß es außerdem eine oder mehrere Einheiten einer oder mehrerer der Formeln IV bis IX umfaßt:

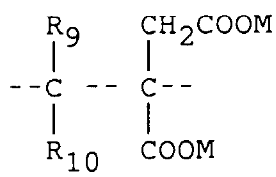

(IV)

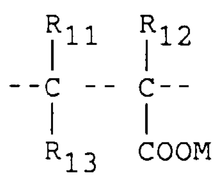

(V)

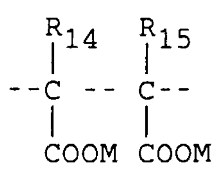

(VI)

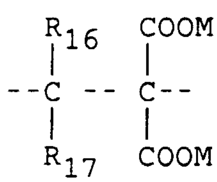

(VII)

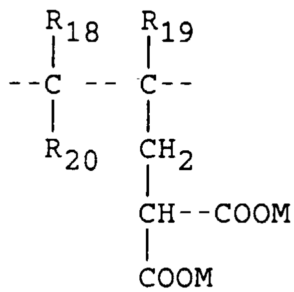

(VIII)

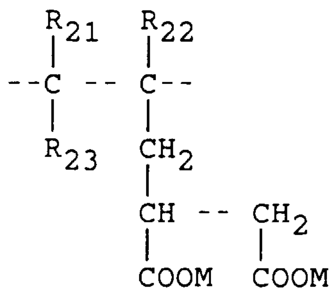

(IX)

worin die R-Gruppen Wasserstoffatome, Methylgruppen oder Ethylgruppen bedeuten, in beliebiger Kombination, und M ein Wasserstoffatom oder ein löslichmachendes Kation wiedergibt.

**8.** Polymer nach Anspruch 7, dadurch gekennzeichnet, daß jede der R-Gruppen ein Wasserstoffatom wiedergibt.

**9.** Polymer nach Anspruch 8, das Einheiten der Formel III und Einheiten der Formel IV umfaßt, dadurch gekennzeichnet, daß es ein Copolymer von Allylcitrat und Itaconsäure oder ein Salz davon ist.

**10.** Polymer nach Anspruch 8, das Einheiten der Formel III und Einheiten der Formel V umfaßt, dadurch gekennzeichnet, daß es ein Copolymer von Allylcitrat und Acrylsäure oder ein Salz davon ist.

**11.** Polymer nach Anspruch 8, das Einheiten der Formel III und Einheiten der Formel VI umfaßt, dadurch gekennzeichnet, daß es ein Copolymer von Allylcitrat und Maleinsäure oder ein Salz davon ist.

**12.** Polymer nach einem vorangehenden Anspruch, dadurch gekennzeichnet, daß es außerdem eine oder mehrere Einheiten gemäß einer oder mehrerer der Formeln X bis XV umfaßt:

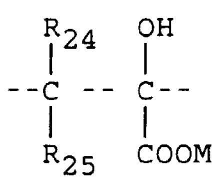

(X)

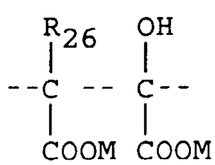

(XI)

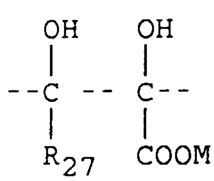

(XII)

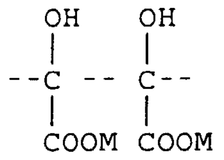

(XIII)

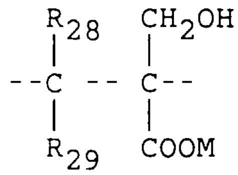

(XIV)

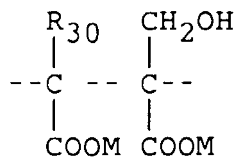

(XV)

worin jede der R-Gruppen, die gleich oder verschieden sein können, ein Wasserstoffatom, eine Methylgruppe oder eine Ethylgruppe wiedergibt, und M ein Wasserstoffatom oder ein löslichmachendes Kation darstellt.

**13.** Polymer nach Anspruch 12, dadurch gekennzeichnet, daß jede der R-Gruppen ein Wasserstoffatom wiedergibt.

**14.** Polymer nach Anspruch 13, das Einheiten der Formel III und Einheiten der Formel X umfaßt, dadurch gekennzeichnet, daß es ein Copolymer von Allylcitrat und α-Hydroxyacrylsäure oder ein Salz davon ist.

**15.** Polymer nach einem vorangehenden Anspruch, dadurch gekennzeichnet, daß es in Natriumsalzform vorliegt.

**16.** Verwendung eines Polymers nach einem vorangehenden Anspruch zur Bindung zweiwertiger und mehrwertiger Metalle.

**17.** Waschmittel, umfassend mindestens einen Waschmittelaktivstoff und mindestens einen Waschmittelbuilder, dadurch gekennzeichnet, daß der Waschmittelbuilder vollständig oder teilweise aus einem Polymer nach einem der Ansprüche 1 bis 15 besteht.

**18.** Waschmittel nach Anspruch 17, dadurch gekennzeichnet, daß es 0,5 bis 60 Gew.% der Waschmittelaktivstoffverbindung und 15 bis 80 Gew.% Waschmittelbuilder und gegebenenfalls weitere Waschmittelwirkstoffe bis 100 Gew.% umfaßt.

## Revendications

**1.** Un polymère de polycarboxylate présentant une masse moléculaire moyenne en nombre comprise entre 1000 et 100 000 et une masse moléculaire moyenne en masse comprise entre 1 000 et 1 000 000, ledit polymère renfermant au moins une unité présentant la Formule I :

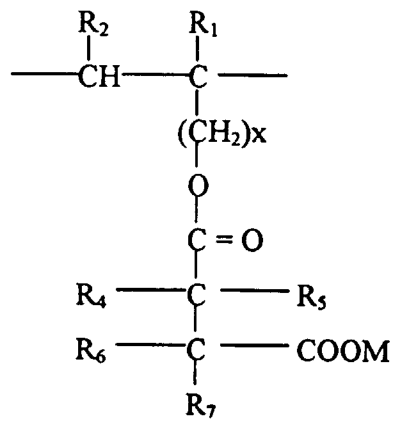

(I)

où x est égal à 0,1 ou 2; les groupes R représentent des atomes d'hydrogène, des groupes hydroxyle, des groupes carboxyle, des groupes alkyle en $C_1$ à $C_3$, des groupes hydroxyalkyle en $C_1$ à $C_3$, des groupes carboxyalkyle en $C_1$ à $C_3$, ou un groupe hydroxycarboxyméthyle, à condition qu'au moins un des groupes $R_4$, $R_5$, $R_6$ et $R_7$ contienne un groupe -COOM ; et M est un atome d'hydrogène ou un cation de solubilisation.

**2.** Un polymère tel que revendiqué dans la Revendication 1, caractérisé en ce qu'il contient au moins une unité présentant la Formule II :

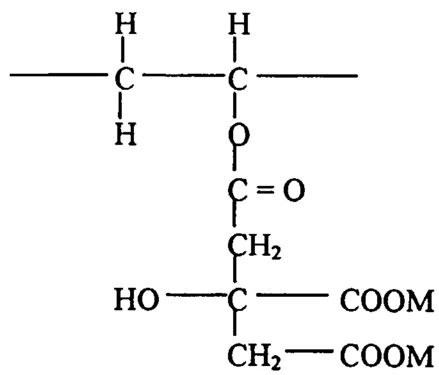

(II)

où M est tel qu'indiqué dans la Revendication 1.

**3.** Un polymère tel que revendiqué dans la Revendication 2, caractérisé en ce qu'il comprend du citrate de polyvinyle.

**4.** Un polymère tel que revendiqué dans la Revendication 1, caractérisé en ce qu'il contient au moins une unité présentant la Formule III :

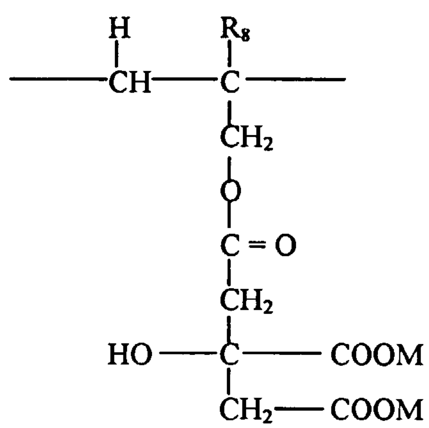

(III)

où $R_8$ représente un atome d'hydrogène ou un groupe -COOM, et M est tel qu'indiqué dans la Revendication 1.

**5.** Un polymère tel que revendiqué dans la Revendication 4, caractérisé en ce qu'il comprend un ester d'alcool de polyallyle avec de l'acide citrique, ou un sel de celui-ci.

**6.** Un polymère tel que revendiqué dans la Revendication 5, caractérisé en ce qu'il comprend un ester d'acide poly ($\alpha$-hydroxyméthylacrylique) avec de l'acide citrique, ou un sel de celui-ci.

**7.** Un polymère tel que revendiqué dans l'une quelconque des Revendications précédentes, caractérisé en ce qu'il comprend en outre une ou plusieurs unités présentant l'une quelconque ou plusieurs des Formules IV à IX :

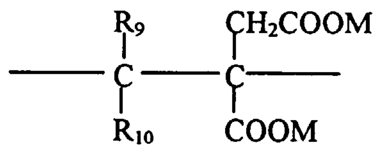

(IV)

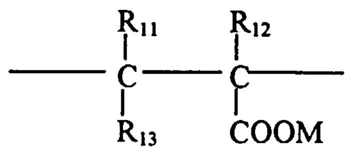

(V)

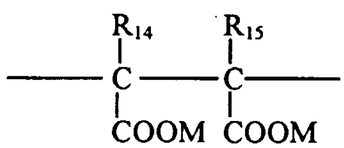

(VI)

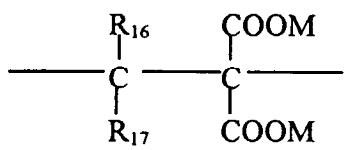

(VII)

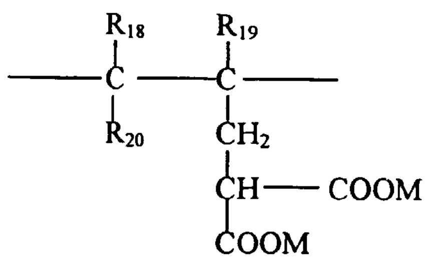

(VIII)

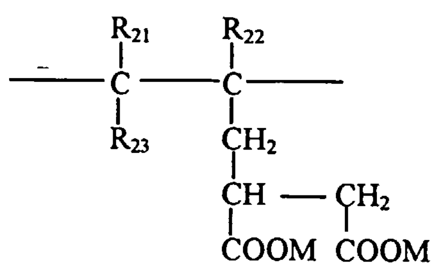

(IX)

où les groupes R sont des atomes d'hydrogène, des groupes méthyle ou des groupes éthyle, sous une combinaison quelconque, et M représente un atome d'hydrogène ou un cation de solubilisation.

**8.** Un polymère tel que revendiqué dans la Revendication 7, caractérisé en ce que chacun des groupes R représente un atome d'hydrogène.

**9.** Un polymère tel que revendiqué dans la Revendication 8, comprenant des unités présentant la Formule III et des unités présentant la Formule IV, caractérisé en ce que c'est un polymère de citrate d'allyle et d'acide itaconique, ou un sel de celui-ci.

**10.** Un polymère tel que revendiqué dans la Revendication 8, comprenant des unités présentant la Formule III et des unités présentant la Formule V, caractérisé en ce que c'est un polymère de citrate d'allyle et d'acide acrylique, ou un sel de celui-ci.

**11.** Un polymère tel que revendiqué dans la Revendication 8, comprenant des unités présentant la Formule III et des unités présentant la Formule VI, caractérisé en ce que c'est un polymère de citrate d'allyle et d'acide maléique, ou un sel de celui-ci.

**12.** Un polymère tel que revendiqué dans l'une quelconque des Revendications précédentes, caractérisé en ce qu'il comprend en outre une ou plusieurs unités présentant l'une quelconque ou plusieurs des Formules X à XV :

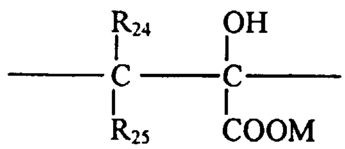
(X)

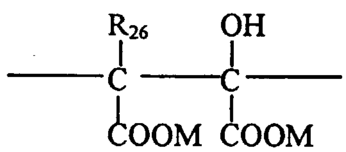
(XI)

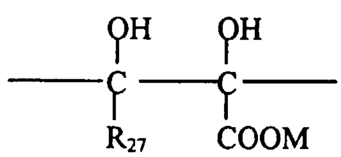
(XII)

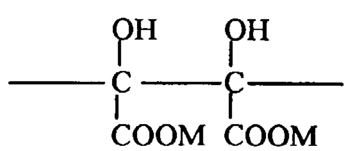
(XIII)

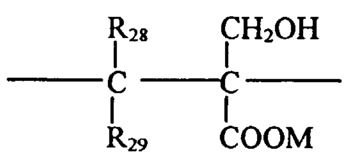
(XIV)

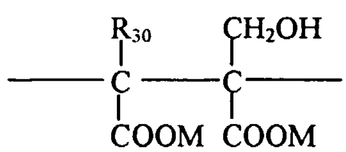
(XV)

où chacun des groupes R, qui peuvent être identiques ou différents, représente un atome d'hydrogène, un groupe

méthyle ou un groupe éthyle, et M représente un atome d'hydrogène ou un cation de solubilisation.

**13.** Un polymère tel que revendiqué dans la Revendication 12, caractérisé en ce que chacun des groupes R représente un atome d'hydrogène.

**14.** Un polymère tel que revendiqué dans la Revendication 13, comprenant des unités présentant la Formule III et des unités présentant la Formule X, caractérisé en ce que c'est un copolymère de citrate d'allyle et d'acide $\alpha$-hydroxyacrylique, ou un sel de celui-ci.

**15.** Un polymère tel que revendiqué dans l'une quelconque des Revendications précédentes, caractérisé en ce qu'il se présente sous forme d'un sel de sodium.

**16.** Utilisation d'un polymère tel que revendiqué dans l'une quelconque des Revendications précédentes pour lier des métaux divalents et polyvalents.

**17.** Une composition détergente comprenant au moins un composé détergent actif et au moins un édificateur de détergence, caractérisée en ce que l'édificateur de détergence se compose totalement ou partiellement d'un polymère tel que revendiqué dans l'une quelconque des Revendications 1 à 15.

**18.** Une composition détergente telle que revendiquée dans la revendication 17, caractérisée en ce qu'elle comprend 0,5 à 60 % en masse d'un composé détergent actif et 15 à 80 % en masse d'un édificateur de détergence, et en option d'autres ingrédients de détergents jusqu'à 100 % en masse.